# FASCICULE DE BREVET EUROPEEN

(11) **EP 2 318 680 B1**
(45) Date de publication et mention de la délivrance du brevet: **04.01.2023**
(21) Numéro de dépôt: 09736431.9
(22) Date de dépôt: 17.07.2009
(51) Int. Cl.: F02D 41/00, F02M 26/06

(54) **PROCÉDÉ DE GESTION D'UN CIRCUIT DE CIRCULATION DE GAZ D'ÉCHAPPEMENT D'UN MOTEUR THERMIQUE À ESSENCE ET SYSTÈME DE RECIRCULATION CORRESPONDANT**
VERFAHREN ZUR VERWALTUNG DES ABGASZIRKULATIONSKREISLAUFS EINES BENZINVERBRENNUNGSMOTORS UND ENTSPRECHENDES REZIRKULATIONSSYSTEM
METHOD FOR MANAGING THE EXHAUST GAS CIRCULATION CIRCUIT OF A PETROL THERMAL ENGINE AND CORRESPONDING RECIRCULATION SYSTEM

(30) Priorité: 22.07.2008 FR 0804171
(43) Date de publication de la demande: 11.05.2011
(73) Titulaire: Vitesco Technologies GmbH, 93055 Regensburg (DE)
(72) Inventeur: VITIELLO, Nicolas, F-75009 Paris (FR); POTTEAU, Sébastien, F-78510 Triel sur Seine (FR); COUSIN, Frédéric, 95210 Saint Gratien (FR); VIOLETTE, Loic, F-92400 Courbevoie (FR); FOURNIGAULT, Damien, F-78700 Conflans-Sainte-Honorine (FR)
(74) Mandataire: Vitesco Technologies
(86) Numéro de dépôt international: PCT/FR2009/000879
(87) Numéro de publication internationale: WO 2010/010246

(56) Documents cités:
- DE-A1-102006 054 043
- JP-A- 2001 280 202
- US-A1- 2004 084 015
- US-A1- 2007 079 614

## Description

La présente invention concerne un procédé de gestion d'un circuit de recirculation de gaz d'échappement d'un moteur thermique à essence et un système de circulation des gaz d'un tel moteur.

### ARRIERE PLAN DE L'INVENTION

Un moteur thermique comporte un bloc délimitant des chambres de combustion qui sont reliées à une ligne d'admission de gaz frais et à une ligne d'échappement des gaz brûlés. Dans la ligne d'admission est monté un papillon de régulation de débit dont le positionnement est déterminé en fonction de l'enfoncement de la pédale d'accélérateur du véhicule pour commander le régime de rotation du moteur. Dans la ligne d'échappement est généralement montée une turbine d'entraînement d'un compresseur monté dans la ligne d'admission.

Il est connu dans les moteurs thermiques Diesel de monter entre la ligne d'admission et la ligne d'échappement un circuit de recirculation des gaz d'échappement vers la ligne d'admission. Un tel circuit de recirculation comprend généralement une vanne de régulation du débit circulant dans le circuit de recirculation. Le circuit de recirculation est généralement raccordé à la ligne d'échappement en amont de la turbine et à la ligne d'admission en aval du compresseur (circuit de recirculation dit haute pression).

On envisage dans l'avenir d'équiper les moteurs thermiques à essence d'un circuit de recirculation qui serait raccordé à la ligne d'échappement en aval de la turbine et plus précisément en aval du catalyseur et à la ligne d'admission en amont du compresseur (le circuit de recirculation serait alors à basse pression) pour abaisser les températures d'échappement et augmenter la résistance aux cliquetis de ces moteurs. Ceci supposerait toutefois de réguler de manière précise et fiable le débit de gaz dans le circuit de recirculation sur toute la plage de fonctionnement du moteur afin de limiter les émissions polluantes de celui-ci, stabiliser la combustion et empêcher l'apparition de cliquetis. La régulation est généralement effectuée en utilisant une mesure de la différence de pression entre la pression en amont et la pression en aval de la vanne de régulation du débit de circuit de recirculation. Or, à faible charge, cette différence de pression est faible et oblige à utiliser des capteurs de pression ayant une précision les rendant coûteux.

Le document DE102006054043 divulgue un moteur à essence avec une boucle de recirculation des gaz basse pression. Lorsque la pression différentielle mesurée aux abords de la vanne de régulation EGR est inférieure à un certain seuil, le débit dans la ligne d'échappement est régulé afin d'augmenter la différence de pression.

### OBJET DE L'INVENTION

Par l'invention, on entend fournir un moyen permettant de fiabiliser de manière simple et peu coûteuse la régulation de débit au sein d'un circuit de recirculation de gaz d'échappement pour moteur thermique à essence.

### RESUME DE L'INVENTION

A cet effet, on prévoit, selon l'invention, un procédé de gestion d'un circuit de recirculation de gaz d'échappement d'un moteur thermique à essence selon la revendication 1, le moteur comportant au moins une chambre de combustion reliée à une ligne d'admission et une ligne d'échappement entre lesquelles s'étend le circuit de recirculation basse pression, la ligne d'échappement étant munie d'une turbine d'entraînement d'un compresseur monté dans la ligne d'admission, la ligne d'admission comprenant en aval du circuit de recirculation un papillon de réglage de régime moteur et le circuit de recirculation comprenant une vanne de régulation de débit et le procédé comprenant l'étape de commander la vanne de régulation de débit en fonction d'une consigne de débit, le procédé comprenant les étapes de :
- détecter un paramètre de fonctionnement représentatif d'une différence de pression entre une pression en amont et une pression en aval de la vanne de régulation de débit,
- après comparaison du paramètre avec un seuil correspondant à une différence de pression minimale, réguler le débit dans au moins une des lignes pour augmenter la différence de pression.

En d'autres termes, lorsque la comparaison du paramètre avec le seuil indique que la différence de pression aux bornes de la vanne de régulation de débit est inférieure à une valeur minimale, on régule la pression dans au moins une des lignes pour augmenter cette différence de pression.

Le paramètre de fonctionnement représentatif peut être par exemple le régime moteur.

La différence de pression minimale est déterminée pour répondre à un besoin de débit dans la vanne (déterminé pour le fonctionnement du moteur) mais surtout assurer l'obtention d'une estimation suffisamment précise du débit. En effet, les capteurs de pression et/ou de débit utilisés couramment dans l'automobile ont une précision satisfaisante pour les débits importants, mais ne sont pas assez sensibles pour les faibles débits et leur précision est alors réduite.

Ainsi, il est effectué une régulation du débit dans une des lignes de manière à augmenter la différence de pression aux bornes de la vanne de régulation de débit du circuit de recirculation dans une proportion suffisante pour faciliter la commande de la vanne de régulation du débit du circuit de recirculation, notamment en permettant une mesure plus précise des débits.

Selon des modes de réalisations alternatifs:
- l'augmentation de la différence de pression est obtenue en régulant le débit dans une zone de la ligne d'admission située en amont du circuit de recirculation de manière à diminuer la pression dans la ligne d'admission en aval de cette zone et du circuit de recirculation ;
- l'augmentation de la différence de pression est obtenue en régulant le débit dans la ligne d'échappement en aval du circuit de recirculation de manière à augmenter la pression dans le circuit de recirculation côté ligne d'échappement.

De préférence alors, le procédé comprend l'étape d'agir sur le papillon pour compenser la variation de pression dans la ligne d'admission ou dans la ligne d'échappement.

Le papillon de réglage du régime moteur assure alors une fonction supplémentaire de compensation de la variation de pression produite dans la ligne d'admission ou dans la ligne d'échappement en vue d'augmenter la différence de pression.

La régulation pour augmenter la différence de pression est réalisée au moyen d'au moins une vanne additionnelle montée dans la ligne concernée, le procédé comprenant les étapes de :
- déterminer une consigne de positionnement de la vanne additionnelle à partir au moins de la différence de pression minimale,
- corriger le positionnement de la vanne additionnelle en fonction d'une mesure représentative de la différence de pression dans le circuit de recirculation.

Ceci permet l'obtention de temps de réponse relativement courts de la boucle de régulation et permet de satisfaire au besoin de débit et/ou de déterminer précisément le débit dans la vanne de régulation.

Selon l'invention, la différence de pression minimale est utilisée pour déduire une pression en amont et une pression en aval de la vanne additionnelle qui sont utilisées pour déterminer un débit dans la vanne additionnelle à partir d'un modèle Barré Saint Venant.

L'invention a également pour objet un système de circulation des gaz d'un moteur thermique à essence selon la revendication 6, comportant une ligne d'admission et une ligne d'échappement auxquelles est raccordé un circuit de recirculation de gaz d'échappement, un papillon de réglage de régime moteur étant monté dans la ligne d'admission en aval du circuit de recirculation, une première vanne de régulation de débit étant montée dans le circuit de recirculation et une deuxième vanne de régulation de débit étant montée dans une des lignes, le papillon et la deuxième vanne étant reliés à une unité de commande agencée pour commander la deuxième vanne de manière à augmenter une différence de pression entre une pression en amont et une pression en aval de la première vanne et le papillon pour compenser cette variation de pression.

Ainsi, on peut augmenter la différence de pression autour de la vanne et commander le papillon pour compenser la variation de pression (résultant de cette augmentation) au niveau du moteur de manière à ne pas perturber le fonctionnement de celui-ci ni affecter négativement les performances de celui-ci.

La deuxième vanne peut-être disposée dans la ligne d'admission en amont du circuit de recirculation. Elle peut également être disposée dans la ligne d'échappement en aval du circuit de recirculation.

D'autres caractéristiques et avantages de l'invention ressortiront à la lecture de la description qui suit de deux modes de réalisation particuliers non limitatifs de l'invention.

### BREVE DESCRIPTION DES DESSINS

Il sera fait référence aux dessins annexés, parmi lesquels :
- la figure 1 est une représentation schématique d'un moteur comprenant un système de circulation des gaz conforme à un premier mode de réalisation de l'invention,
- la figure 2 est un schéma bloc illustrant la mise en œuvre du procédé conforme à l'invention dans ce système de circulation de gaz,
- la figure 3 est un schéma analogue à celui de la figure 2 d'une variante de mise en œuvre,
- la figure 4 est une vue schématique d'un moteur ayant un système de circulation à gaz conforme à un deuxième mode de réalisation de l'invention.

### DESCRIPTION DETAILLEE DE L'INVENTION

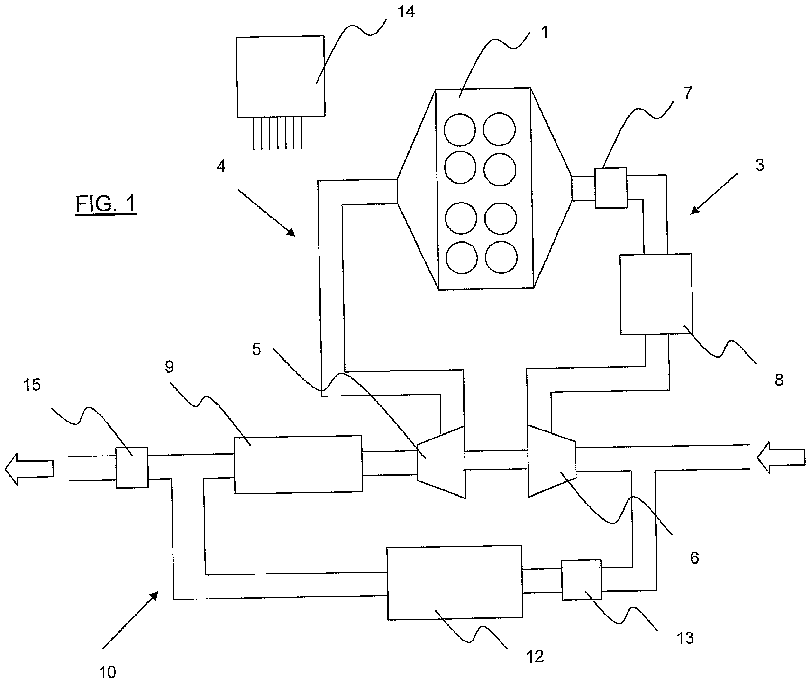

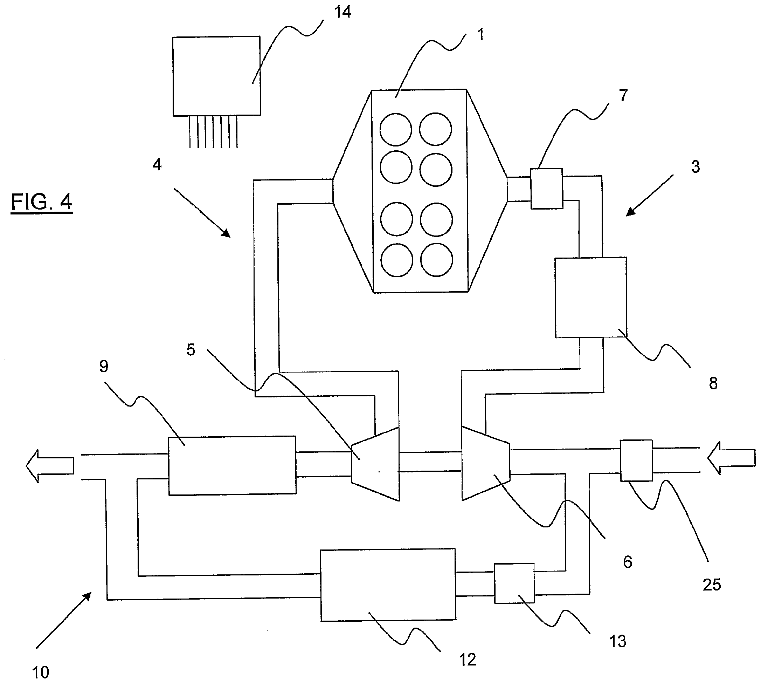

En référence aux figures 1 et 4, le moteur comprend un bloc 1 délimitant des chambres de combustion 2 reliées à une ligne d'admission 3 et à une ligne d'échappement 4. Dans la ligne d'échappement 4 est montée une turbine 5 d'entraînement d'un compresseur 6 monté dans la ligne d'admission 3.

Dans la ligne d'admission, entre le bloc moteur 1 et le compresseur 6, sont montés un papillon 7 de réglage de régime moteur et un refroidisseur 8 d'air de suralimentation.

Dans la ligne d'échappement est monté en aval de la turbine 5 un catalyseur 9.

Un circuit de recirculation des gaz d'échappement (ou EGR) 10 est monté entre la ligne d'échappement 4 et la ligne d'admission 3. Le circuit EGR 10 comporte une extrémité reliée à la ligne d'échappement 4 en aval du catalyseur 9 et une extrémité reliée à la ligne d'admission 3 en amont du compresseur 6. Le circuit EGR comporte un refroidisseur 12 comportant de façon connue en elle-même une voie refroidie et une voie non refroidie entre lesquelles est monté un organe de dérivation pour diriger le flux de gaz d'échappement sélectivement vers la voie refroidie ou la voie non refroidie. Le circuit EGR 10 comporte également une vanne de régulation de débit 13 montée ici entre le refroidisseur 12 et la ligne d'admission 3.

Une unité de gestion du moteur 14 ou ECU (de l'anglais Engine Control Unit) est reliée au papillon 7, à la vanne de régulation 13, au circuit d'allumage (non représenté), et au circuit d'injection de carburant (non représenté) pour commander ceux-ci en fonction d'informations fournies par des capteurs de caractéristiques de fonctionnement du moteur et des instructions émanant du conducteur par exemple au moyen de la pédale d'accélérateur, de la vitesse enclenchée, du mode de conduite choisi...

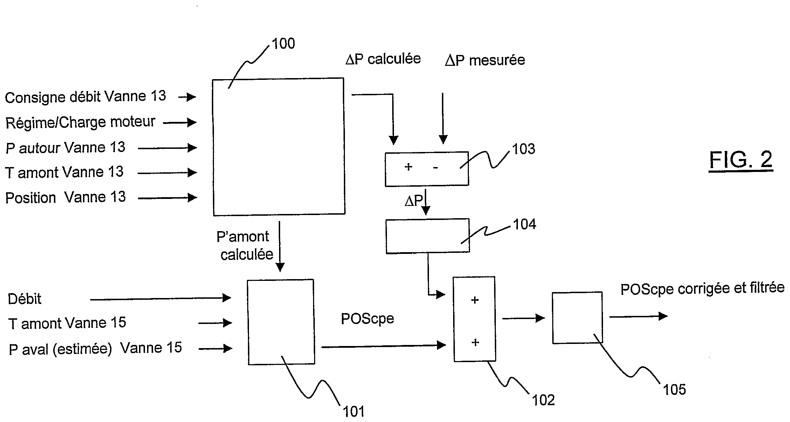

En référence plus particulièrement aux figures 1 et 2, la ligne d'échappement 4 comprend une vanne additionnelle appelée vanne de contre-pression 15 qui est montée en aval du raccordement de la ligne d'échappement 4 au circuit EGR 10. Cette vanne de contre-pression 15 est reliée à l'unité de gestion moteur 14 pour être commandée par celle-ci.

Le procédé conforme à l'invention va maintenant être décrit en référence également à la figure 2.

A partir de mesures ou d'estimations et de température en amont de la vanne de régulation de débit 13, de la pression autour de la vanne de régulation de débit 13, de la position (c'est-à-dire du degré d'ouverture) de la vanne de régulation de débit 13 et de la consigne de débit dans la vanne de régulation de débit 13 (qui était préalablement prédéterminée en fonction des besoins en introduction de gaz brûlé dans la ligne d'admission), l'unité de gestion du moteur 14 détermine, ici par calcul (étape 100), une pression Pₐₘₒₙₜ, en amont de la vanne de régulation 13 et une différence de pression ΔP calculée entre la pression en amont et la pression en aval de la vanne de régulation 13 suffisante pour permettre la détermination du débit réel dans la vanne de régulation de débit 13. Il en est déduit la pression P'ₐₘₒₙₜ en amont de la vanne de contre pression 15. La pression P'ₐₘₒₙₜ est égale à la pression Pₐₘₒₙₜ. La position de la vanne de contre-pression 15 est alors calculée (étape 101) à partir du débit correspondant, de la température en amont de la vanne de contre-pression 15 et de la pression en aval de la vanne de contre-pression 15. Cette position, notée POS_{cpe} est ensuite corrigée (étape 102) avec une valeur corrective. La valeur corrective est issue d'une correction de type PID (Proportionnelle, Intégrale, Dérivée) effectuée (étape 103) sur la différence de pression ΔP calculée et la mesure de la différence de pression autour de la vanne de régulation 13 (ΔP mesurée) . La correction de type PID permet un recentrage de la position remédiant à un décalage pouvant se produire du fait d'un encrassement, d'une usure... La position ainsi corrigée est filtrée (étape 104) puis utilisée comme consigne pour commander la vanne de contre-pression 15. On comprend que la position POS_{CPE} de la vanne de contrepression 15 est d'abord calculée en boucle ouverte (étape 101) puis en boucle fermée (étape 102).

Les éléments identiques ou analogues à ceux précédemment décrits portent une référence numérique identique dans la description qui suit du deuxième mode de réalisation.

Le moteur présenté en relation avec le deuxième mode de réalisation est identique à celui décrit en référence avec le premier mode de réalisation sauf en ce que :
- il n'y a pas de vanne de contre-pression dans la ligne d'échappement ou tout au moins une telle vanne n'est pas utilisée dans le but d'augmenter la différence de pression entre la pression en amont et la pression en aval de la vanne de régulation 13,
- la ligne d'admission 3 comprend une vanne additionnelle 25 montée en amont du raccordement du circuit EGR 10 à la ligne d'admission 3. La vanne additionnelle 25 est comme précédemment commandée par l'unité de gestion du moteur 14 de manière à faire diminuer la pression entre la vanne additionnelle 25 et le papillon 7 pour augmenter la différence de pression entre la pression en amont et la pression en aval de la vanne de régulation 13. Le procédé de commande de la vanne additionnelle 25 est identique à celui de la vanne de contre-pression 15 sauf en ce que les paramètres déterminant la position de la vanne additionnelle 25 et de la vanne de régulation 13 sont la pression en amont de la vanne additionnelle 25 et la pression en aval de la vanne de régulation 13.

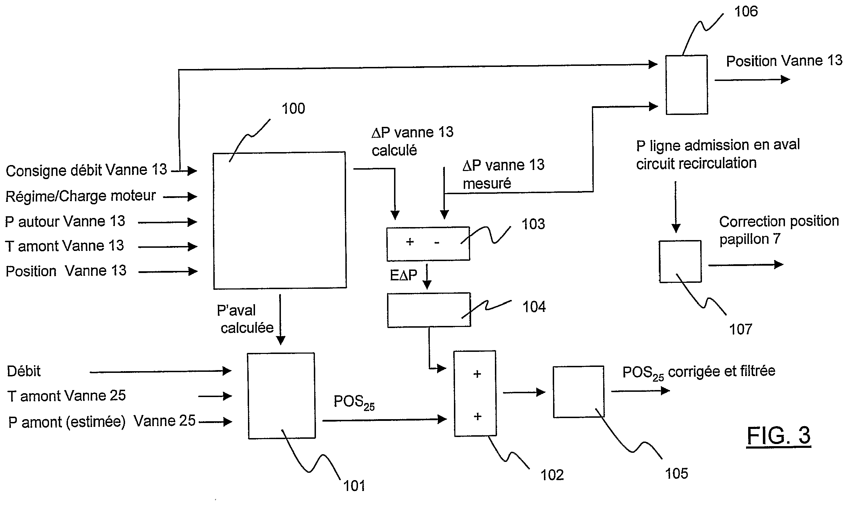

Dans le procédé de la figure 3, il est prévu d'agir également sur le papillon 7.

Dans cette variante, il est prévu de déterminer un paramètre de fonctionnement représentatif d'une différence de pression entre une pression en amont et une pression en aval de la vanne de régulation de débit 13. Après comparaison du paramètre avec un seuil correspondant à une différence de pression minimale, le procédé comprend l'étape d'agir sur la vanne additionnelle 25 pour augmenter la différence de pression. Plus précisément, la commande effectuée sur la vanne additionnelle 25 vise à diminuer la pression en aval de la vanne de régulation 13. Il est prévu également d'agir sur la commande du papillon 7 pour augmenter la pression dans la ligne d'admission, c'est-à-dire en aval de la vanne de régulation 13 de manière à compenser, au niveau du moteur, la variation de pression engendrée par la commande.

Dans cette variante, les étapes 100 à 105 sont identiques à celles précédemment décrites.

La position POS₂₅ de la vanne additionnelle 25 est déterminée à partir du débit (consigne), de la température T en amont de la vanne 25, d'une estimation de la pression en amont de la vanne 25 et d'une pression P'ₐᵥₐₗ en aval de la vanne 25 calculée au cours de l'étape 100 et égale à la pression en aval de la vanne 13 nécessaire pour avoir la différence de pression ΔP (consigne) autour de la vanne 13.

La consigne de débit sur la vanne 13 et la différence de pression ΔP mesurée autour de la vanne 13 sont ensuite également utilisées pour modéliser la chaîne d'air (étape 106) dans le moteur pour déterminer la consigne de position de la vanne 13.

La position du papillon 7 est corrigée en fonction d'une mesure de la pression dans la ligne d'admission entre le papillon 7 et le circuit de recirculation (c'est-à-dire en aval du circuit de recirculation).

On notera que le paramètre retenu pour déterminer la position des vannes est toujours représentatif d'une différence de pression entre la pression en amont et la pression en aval de la vanne de régulation 13.

Bien entendu, l'invention n'est pas limitée aux modes de réalisation décrits et on peut y apporter des variantes de réalisation sans sortir du cadre de l'invention tel que défini par les revendications.

Les procédés des figures 2 et 3 sont utilisables pour les deux modes de réalisation du système.

## Revendications

1. Procédé de gestion d'un circuit de recirculation (10) basse pression de gaz d'échappement d'un moteur thermique à essence, le moteur comportant au moins une chambre de combustion (2) reliée à une ligne d'admission (3) et une ligne d'échappement (4) entre lesquelles s'étend le circuit de recirculation basse pression (10), la ligne d'échappement étant munie d'une turbine (5) d'entraînement d'un compresseur (6) monté dans la ligne d'admission, la ligne d'admission comprenant en aval du circuit de recirculation (10) un papillon (7) de réglage de régime moteur et le circuit de recirculation (10) comprenant une vanne de régulation (13) de débit, le procédé comprenant l'étape de commander la vanne de régulation (13) de débit en fonction d'une consigne de débit ainsi que les étapes de :
- détecter un paramètre de fonctionnement représentatif d'une différence de pression aux bornes de la vanne de régulation (13) de débit, à l'aide d'un capteur présentant un seuil de précision,
- comparaison du paramètre avec un seuil correspondant à une différence de pression minimale aux bornes de la vanne de régulation (13), déterminée pour répondre à un besoin de débit dans la vanne de régulation et/ou permettre une détermination du débit dans la vanne de régulation,
- régulation du débit dans au moins une des lignes (3, 4) pour augmenter la différence de pression aux bornes de la vanne de régulation (13), lorsque la comparaison du paramètre de fonctionnement avec le seuil correspondant à une différence de pression minimale aux bornes de la vanne de régulation indique que la différence de pression aux bornes de la vanne de régulation de débit est inférieure à la différence de pression minimale; l'étape de régulation du débit pour augmenter la différence de pression aux bornes de la vanne de régulation étant réalisée au moyen d'au moins une vanne additionnelle (15, 25) montée dans la ligne (3, 4) concernée, le procédé étant **caractérisé en ce que** l'étape de régulation comprend les sous-étapes de :
- déterminer une consigne (POScpe, POS₂₅) de positionnement de la vanne additionnelle (15, 25) à partir au moins de la différence de pression minimale aux bornes de la vanne de régulation (13), ladite différence de pression minimale aux bornes de la vanne de régulation étant utilisée pour déduire une pression en amont et une pression en aval de la vanne additionnelle qui sont utilisées pour déterminer un débit dans la vanne additionnelle (15) à partir d'un modèle Barré Saint Venant ; et
- corriger le positionnement de la vanne additionnelle (15) en fonction d'une mesure représentative de la différence de pression aux bornes de la vanne de régulation (13) dans le circuit de recirculation.

2. Procédé selon la revendication 1 dans lequel l'augmentation de la différence de pression est obtenue en régulant le débit dans des zones de la ligne d'admission situées en amont et en aval du circuit de recirculation (10) de manière à diminuer la pression dans la ligne d'admission (3) entre ces deux zones.

3. Procédé selon la revendication 1 dans lequel l'augmentation de la différence de pression est obtenue en régulant le débit dans la ligne d'admission (3) en amont du circuit de recirculation (10) et dans la ligne d'échappement (4) en aval du circuit de recirculation de manière à augmenter la pression dans le circuit de recirculation côté ligne d'échappement et à diminuer la pression dans le circuit de recirculation côté ligne d'admission.

4. Procédé selon la revendication 2 ou la revendication 3, dans lequel le procédé comprend l'étape d'agir sur le papillon pour compenser au niveau du moteur la variation de pression dans la ligne d'admission (3) ou dans la ligne d'échappement (4).

5. Procédé selon l'une des revendications 1 à 4, dans lequel le paramètre de fonctionnement représentatif d'une différence de pression entre une pression en amont et une pression en aval de la vanne de régulation de débit (13) est le régime du moteur.

6. Système de circulation des gaz d'un moteur thermique à essence, comportant une ligne d'admission (3) et une ligne d'échappement (4) auxquelles est raccordé un circuit de recirculation (10) basse pression de gaz d'échappement, la ligne d'échappement (4) étant munie d'une turbine (5) d'entraînement d'un compresseur (6) monté dans la ligne d'admission (3), un papillon (7) de réglage de régime moteur étant monté dans la ligne d'admission en aval du circuit de recirculation, une première vanne de régulation de débit (13) étant montée dans le circuit de recirculation et une deuxième vanne de régulation de débit (15, 25), dite vanne additionnelle, étant montée dans une des lignes (3, 4), le système comprenant en outre :
- un capteur détectant un paramètre de fonctionnement représentatif d'une différence de pression entre une pression en amont et une pression en aval de la première vanne de régulation de débit, ledit capteur présentant un seuil de précision, et
- une unité de commande (14) à laquelle le papillon et la deuxième vanne sont reliés, ladite unité de commande étant agencée pour mettre en œuvre le procédé selon l'une des revendications 1 à 5.

7. Système selon la revendication 6, dans lequel la deuxième vanne (25) est disposée dans la ligne d'admission (3) en amont du circuit de recirculation (10).

8. Système selon la revendication 6, dans lequel la deuxième vanne (15) est disposée dans la ligne d'échappement (4) en aval du circuit de recirculation (10).

## Patentansprüche

1. Verfahren zur Verwaltung eines Niederdruckrezirkulationskreislaufs (10) für Abgase eines Benzinverbrennungsmotors, wobei der Motor mindestens eine Brennkammer (2) umfasst, die mit einer Einlassleitung (3) und einer Auslassleitung (4) verbunden ist, zwischen denen sich der Niederdruckrezirkulationskreislauf (10) erstreckt, wobei die Auslassleitung über eine Turbine (5) zum Antreiben eines Kompressors (6) verfügt, der in der Einlassleitung montiert ist, wobei die Einlassleitung stromabwärts des Rezirkulationskreislaufs (10) eine Drosselklappe (7) zur Regelung der Motordrehzahl beinhaltet und der Rezirkulationskreislauf (10) ein Durchflussregelventil (13) beinhaltet, wobei das Verfahren den Schritt des Steuerns des Durchflussregelventils (13) in Abhängigkeit von einem Durchflusssollwert sowie die folgenden Schritte beinhaltet:
- Detektieren eines Betriebsparameters, der für einen Druckunterschied an den Anschlüssen des Durchflussregelventils (13) repräsentativ ist, mit Hilfe eines Messfühlers, der einen Genauigkeitsschwellenwert aufweist,
- Vergleichen des Parameters mit einem Schwellenwert, der einem Mindestdruckunterschied an den Anschlüssen des Regelventils (13) entspricht, der bestimmt ist, um einen Durchflussbedarf in dem Regelventil zu erfüllen und/oder eine Bestimmung des Durchflusses in dem Regelventil zu gestatten,
- Regeln des Durchflusses in mindestens einer der Leitungen (3, 4), um den Druckunterschied an den Anschlüssen des Regelventils (13) zu erhöhen, wenn der Vergleich des Betriebsparameters mit dem Schwellenwert, der einem Mindestdruckunterschied an den Anschlüssen des Regelventils entspricht, angibt, dass der Druckunterschied an den Anschlüssen des Durchflussregelventils kleiner ist als der Mindestdruckunterschied;
wobei der Schritt des Regelns des Durchflusses, um den Druckunterschied an den Anschlüssen des Regelventils zu erhöhen, mit Hilfe mindestens eines zusätzlichen Ventils (15, 25) erfolgt, das in der betroffenen Leitung (3, 4) montiert ist, wobei das Verfahren **dadurch gekennzeichnet ist, dass** der Schritt des Regelns die folgenden Unterschritte beinhaltet:
- Bestimmen eines Stellungssollwerts (POScpe, POS₂₅) des zusätzlichen Ventils (15, 25) mindestens anhand des Mindestdruckunterschieds an den Anschlüssen des Regelventils (13), wobei der Mindestdruckunterschied an den Anschlüssen des Regelventils dazu verwendet wird, einen Druck stromaufwärts und einen Druck stromabwärts des zusätzlichen Ventils abzuleiten, die dazu verwendet werden, einen Durchfluss in dem zusätzlichen Ventil (15) anhand eines Barré-Saint-Venant-Modells zu bestimmen; und
- Korrigieren der Stellung des zusätzlichen Ventils (15) in Abhängigkeit von einer Messung, die für den Druckunterschied an den Anschlüssen des Regelventils (13) in dem Rezirkulationskreislauf repräsentativ ist.

2. Verfahren nach Anspruch 1, wobei die Erhöhung des Druckunterschieds erreicht wird, indem der Durchfluss in Bereichen der Einlassleitung, die sich stromaufwärts und stromabwärts des Rezirkulationskreislaufs (10) befinden, geregelt wird, um den Druck in der Einlassleitung (3) zwischen diesen zwei Bereichen zu verringern.

3. Verfahren nach Anspruch 1, wobei die Erhöhung des Druckunterschieds erreicht wird, indem der Durchfluss in der Einlassleitung (3) stromaufwärts des Rezirkulationskreislaufs (10) und in der Auslassleitung (4) stromabwärts des Rezirkulationskreislaufs geregelt wird, um den Druck in dem Rezirkulationskreislauf auslassleitungsseitig zu erhöhen und den Druck in dem Rezirkulationskreislauf einlassleitungsseitig zu verringern.

4. Verfahren nach Anspruch 2 oder Anspruch 3, wobei das Verfahren den Schritt des Einwirkens auf die Drosselklappe beinhaltet, um die Druckänderung in der Einlassleitung (3) oder in der Auslassleitung (4) in Bezug auf den Motor zu kompensieren.

5. Verfahren nach einem der Ansprüche 1 bis 4, wobei der Betriebsparameter, der für einen Druckunterschied zwischen einem Druck stromaufwärts und einem Druck stromabwärts des Durchflussregelventils (13) repräsentativ ist, die Drehzahl des Motors ist.

6. System zur Zirkulation der Gase eines Benzinverbrennungsmotors, umfassend eine Einlassleitung (3) und eine Auslassleitung (4), an die ein Niederdruckrezirkulationskreislauf (10) für Abgase angeschlossen ist, wobei die Auslassleitung (4) über eine Turbine (5) zum Antreiben eines Kompressors (6) verfügt, der in der Einlassleitung (3) montiert ist, wobei eine Drosselklappe (7) zur Regelung der Motordrehzahl in der Einlassleitung stromabwärts des Rezirkulationskreislaufs montiert ist, wobei ein erstes Durchflussregelventil (13) in dem Rezirkulationskreislauf montiert ist und ein zweites Durchflussregelventil (15, 25), als zusätzliches Ventil bezeichnet, in einer der Leitungen (3, 4) montiert ist, wobei das System ferner Folgendes beinhaltet:
- einen Messfühler, der einen Betriebsparameter, der für einen Druckunterschied zwischen einem Druck stromaufwärts und einem Druck stromabwärts des ersten Durchflussregelventils repräsentativ ist, detektiert, wobei der Messfühler einen Genauigkeitsschwellenwert aufweist, und
- eine Steuereinheit (14), mit der die Drosselklappe und das zweite Ventil verbunden sind, wobei die Steuereinheit dazu eingerichtet ist, das Verfahren nach einem der Ansprüche 1 bis 5 umzusetzen.

7. System nach Anspruch 6, wobei das zweite Ventil (25) in der Einlassleitung (3) stromaufwärts des Rezirkulationskreislaufs (10) angeordnet ist.

8. System nach Anspruch 6, wobei das zweite Ventil (15) in der Auslassleitung (4) stromabwärts des Rezirkulationskreislaufs (10) angeordnet ist.

## Claims

1. Method for managing a low-pressure exhaust gas recirculation circuit (10) for an internal combustion petrol engine, the engine comprising at least one combustion chamber (2) connected to an inlet line (3) and an exhaust line (4), between which lines the low-pressure recirculation circuit (10) extends, the exhaust line being equipped with a turbine (5) for driving a compressor (6) mounted in the inlet line, the inlet line comprising, downstream of the recirculation circuit (10), a butterfly valve (7) for regulating the engine speed and the recirculation circuit (10) comprising a flow regulating valve (13), the method comprising the step of operating the flow regulating valve (13) as a function of a flow rate setpoint, and also the steps of:
- detecting an operating parameter representative of a difference in pressure across the flow regulating valve (13) using a sensor that has a precision threshold,
- comparing the parameter against a threshold corresponding to a minimum pressure difference across the regulating valve (13), which minimum difference is determined in order to meet a requirement for flow rate in the regulating valve and/or to allow the flow rate in the regulating valve to be determined,
- regulating the flow rate in at least one of the lines (3, 4) in order to increase the pressure difference across the regulating valve (13) when the comparison between the operating parameter and the threshold corresponding to a minimum pressure difference across the regulating valve indicates that the pressure difference across the flow regulating valve is below the minimum pressure difference;
the step of regulating the flow rate in order to increase the pressure difference across the regulating valve being performed by means of at least one additional valve (15, 25) mounted in the relevant line (3, 4), the method being **characterized in that** the regulating step comprises the sub-steps of:
- determining a position setpoint (POScpe, POS₂₅) for the additional valve (15, 25) on the basis of at least the minimum pressure difference across the regulating valve (13), said minimum pressure difference across the regulating valve being used to deduce a pressure upstream and a pressure downstream of the additional valve, which pressures are used to determine a flow rate in the additional valve (15) using a Barre Saint Venant model; and
- correcting the position of the additional valve (15) as a function of a measurement representative of the pressure difference across the regulating valve (13) in the recirculation circuit.

2. Method according to Claim 1, wherein the increase in the pressure difference is obtained by regulating the flow rate in zones of the inlet line which are situated upstream and downstream of the recirculation circuit (10) in such a way as to reduce the pressure in the inlet line (3) between these two zones.

3. Method according to Claim 1, wherein the increase in the pressure difference is obtained by regulating the flow rate in the inlet line (3) upstream of the recirculation circuit (10) and in the exhaust line (4) downstream of the recirculation circuit in such a way as to increase the pressure in the recirculation circuit at the exhaust line end and reduce the pressure in the recirculation circuit at the inlet line end.

4. Method according to Claim 2 or Claim 3, wherein the method comprises the step of acting on the butterfly valve in order, at the engine, to compensate for the variation in pressure in the inlet line (3) or in the exhaust line (4).

5. Method according to one of Claims 1 to 4, wherein the operating parameter representative of a difference in pressure between a pressure upstream and a pressure downstream of the flow regulating valve (13) is the engine speed.

6. System for circulating the gasses of an internal combustion petrol engine, comprising an inlet line (3) and an exhaust line (4), to which lines a low-pressure exhaust gas recirculation circuit (10) is connected, the exhaust line (4) being equipped with a turbine (5) for driving a compressor (6) mounted in the inlet line (3), a butterfly valve (7) for regulating engine speed being mounted in the inlet line downstream of the recirculation circuit, a first flow regulating valve (13) being mounted in the recirculation circuit and a second flow regulating valve (15, 25), referred to as an additional valve, being mounted in one of the lines (3, 4), the system further comprising:
- a sensor detecting an operating parameter representative of a difference in pressure between a pressure upstream and a pressure downstream of the first flow regulating valve, said sensor having a precision threshold, and
- a control unit (14) to which the butterfly valve and the second valve are connected,
said control unit being designed to implement the method according to one of Claims 1 to 5.

7. System according to Claim 6, wherein the second valve (25) is arranged in the inlet line (3) upstream of the recirculation circuit (10).

8. System according to Claim 6, wherein the second valve (15) is arranged in the exhaust line (4) downstream of the recirculation circuit (10).
